# EUROPEAN PATENT APPLICATION

(11) **EP 4 459 257 A1**
(43) Date of publication of application: **06.11.2024**
(21) Application number: 22913771.6
(22) Date of filing: 01.11.2022
(51) Int. Cl.: G01N 1/28, G01N 1/44, B01L 7/00, B01L 3/00

(54) **HEATING EQUIPMENT FOR EXPERIMENT CONTAINER, AND ORGANISM SAMPLE PREPARATION DEVICE**

(30) Priority: 29.12.2021 CN 202111633727
(71) Applicant: Rwd Life Science Co., Ltd, Shenzhen, Guangdong 518057 (CN)
(72) Inventor: LIU, Nanfeng, Nanshan District Shenzhen, Guangdong 518057 (CN); HUANG, Yurui, Nanshan District Shenzhen, Guangdong 518057 (CN); LI, Kai, Nanshan District Shenzhen, Guangdong 518057 (CN); LI, Chengyuan, Nanshan District Shenzhen, Guangdong 518057 (CN); YANG, Fangyi, Nanshan District Shenzhen, Guangdong 518057 (CN); HUANG, Baoxiu, Nanshan District Shenzhen, Guangdong 518057 (CN)
(74) Representative: Patentwerk B.V.
(86) International application number: PCT/CN2022/129052
(87) International publication number: WO 2023/124508

(57) **Abstract**

Provided in embodiments of the present application is a heating device, which includes a housing (1); a heating assembly (2) which is supported by the housing (1); and at least one temperature sensor (3) which is arranged with the heating assembly (2); where the heating assembly (2) forms a cavity surrounding an experimental container, and a first surface of the heating assembly is matched with an outer surface of the experimental container, and the heating assembly is configured to clamp and release the experimental container by deformation. According to the embodiments of the present application, the heating assembly forms a cavity surrounding the experimental container, so that the experimental container can be heated when the experimental container is clamped; the heating assembly is integrated with the temperature sensor(s), such that the heating temperature can be monitored and adjusted in real time; the structure is compact, and the heating assembly clamps or releases the experimental container through its own deformation, which can adapt to repeated loading and disassembly, and will not affect other operations in the experimental container.

## Description

This application claims the priority of the Chinese patent application No. 202111633727.X, filed with the Chinese Patent Office on Dec. 29, 2021, and entitled "Heating Device for Experimental Container and Biological Sample Preparation Apparatus", the entire content of which is incorporated herein by reference.

### TECHNICAL FIELD

The present application relates to the field of laboratory instrument technology, and in particular to a heating device for an experimental container and a biological sample preparation apparatus.

### BACKGROUND

In many biological experiments, it is usually necessary to simulate a body temperature of an organism or maintain a specific temperature during preparation of biological samples to facilitate the conduct of biological experiments. Thus, a heating device is needed that can heat a single experimental container and will not affect other operations of the biological experiment while heating. For example, when preparing single cell suspension, operations such as cutting and grinding tissues are performed in each experimental container and the biological sample in each experimental container needs to be maintained at a required temperature. During this process, the maintained temperature cannot fluctuate too much, and in case that the maintained temperature has a large fluctuation, then denaturation of biological samples, etc., may be caused, which will affect the results of the biological experiment.

### SUMMARY

### TECHNICAL PROBLEM

Provided in embodiments of the present application is a heating device for an experimental container, which aims to solve the problem of independently and stably heating different experimental containers in existing technologies.

### SOLUTIONS FOR PROBLEM

### TECHNICAL SOLUTIONS

In accordance with a first aspect, a heating device for an experimental container is provided, including:
a housing (1);
a heating assembly (2) which is supported by the housing (1); and
at least one temperature sensor (3) which is arranged with the heating assembly (2);
where the heating assembly (2) forms a cavity surrounding the experimental container, a first surface of the heating assembly is matched with an outer surface of the experimental container, and the experimental container is clamped or released by a deformation of the heating assembly.

In accordance with a second aspect, a biological sample preparation apparatus is provided, which includes a shell, a plurality of motors, and a plurality of heating devices as described above.

The plurality of motors are arranged in the shell, driving shafts of the plurality of motors are respectively connected to the plurality of experimental containers to drive a plurality of experimental containers to rotate, and the plurality of heating devices are configured to respectively clamp the plurality of experimental containers for heating.

### BENEFICAL EFFECTS OF THE INVENTION

### BENEFICAL EFFECTS

According to the embodiments of the present application, the heating assembly forms a cavity surrounding the experimental container, so that the experimental container can be heated when the experimental container is clamped by the heating assembly. The heating assembly is integrated with the temperature sensor(s), such that the heating temperature can be monitored and adjusted in real time. The structure is compact. The heating assembly clamps or releases the experimental container through its own deformation, which can adapt to repeated loading and disassembly, and will not affect other operations in the experimental container.

### BRIEF DESCRIPTION OF DRAWINGS

### DESCRIPTION OF DRAWINGS

The above and/or additional aspects and advantages of the present application will become apparent and easy to understand from the following description of the embodiments in conjunction with the accompanying drawings, in which:
FIG. 1 is a general schematic diagram of a heating device provided in Embodiment 1 of the present application;
FIG. 2 is a partial schematic diagram of the heating device provided in Embodiment 1 of the present application;
FIG. 3 is a schematic diagram of an experimental container provided in Embodiment 1 of the present application;
FIG. 4 is a bottom schematic diagram of the heating device provided in Embodiment 1 of the present application;
FIG. 5 is a bottom view of the heating device provided in Embodiment 1 of the present application; and
FIG. 6 is a schematic diagram of a biological sample preparation apparatus provided in Embodiment 2 of the present application.

### INVENTION EMBODIMENTS

### DETAILED DESCRIPTION OF EMBODIMENTS

The embodiments of the present application are described in detail below, and examples of the embodiments are shown in the drawings, where the same or similar numbers throughout represent the same or similar modules or modules with the same or similar functions. The embodiments described below with reference to the drawings are exemplary, intended only to interpret the present application and cannot be construed as limitations to this application. On the contrary, the embodiments of the present application include all changes, modifications and equivalents that fall within the spirit and connotation of the appended claims.

Tissue is a cell structure between cells and organs, composed of many morphologically similar cells and intercellular matrix. To conduct cell research on organisms, the tissue needs to be processed and prepared into single cell suspension. The single cell suspension refers to a biological sample in which dispersed individual cells are released due to the destruction of the connection among cells in the tissue. The prepared single cell suspension must have the characteristics of sufficient cell dispersion and high activity, that is, the connection among cells should be fully destroyed while the integrity and activity of single cells are maintained, this is the basis for cell research. In the process of destroying the connection among cells in the tissue in the experimental container, the biological sample in the experimental container needs to be maintained at a specific temperature, such as 37 degrees Celsius.

According to the embodiments of the present application, the heating assembly forms a cavity surrounding the experimental container, so that the experimental container can be heated when the experimental container is clamped by the heating assembly. The heating assembly is integrated with the temperature sensor(s), such that the heating temperature can be monitored and adjusted in real time. The structure is compact. The heating assembly clamps or releases the experimental container through its own deformation, which can adapt to repeated loading and disassembly, and will not affect other operations in the experimental container.

### Embodiment 1

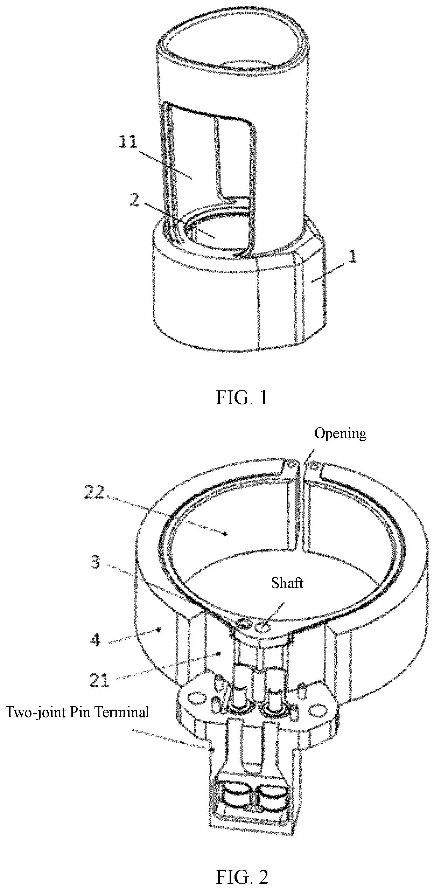

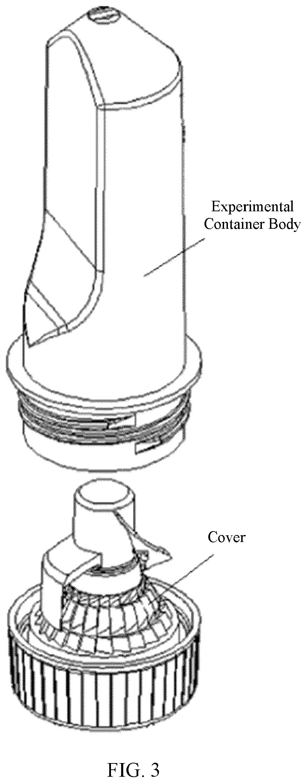

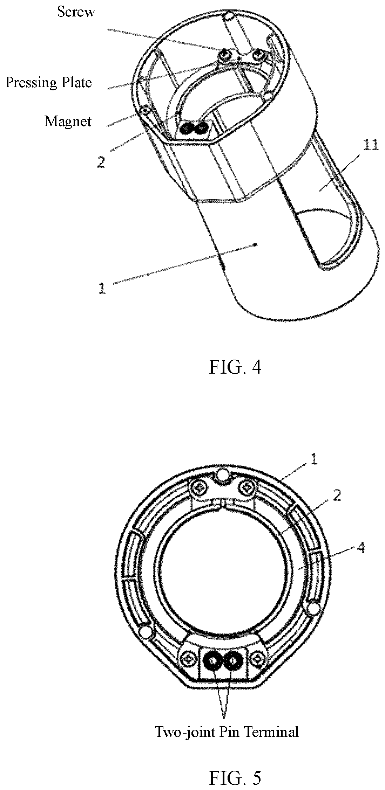

FIG. 1 is a general schematic diagram of a heating device provided in Embodiment 1 of the present application. FIG. 2 is a partial schematic diagram of the heating device provided in Embodiment 1 of the present application. FIG. 3 is a schematic diagram of an experimental container provided in Embodiment 1 of the present application. FIG. 4 is a bottom schematic diagram of the heating device provided in Embodiment 1 of the present application. FIG. 5 is a bottom view of the heating device provided in Embodiment 1 of the present application. In combination with FIGS. 1 to 5, the heating device includes a housing 1, a heating assembly 2 and a temperature sensor 3.

The experimental container for preparing single cell suspension is similar to a cylindrical test tube, and is composed of an experimental container body and a cover. The experimental container body and the cover are connected together by threads. The heating assembly 2 forms a cavity surrounding the experimental container, and a first surface of the heating assembly is matched with an outer surface of the experimental container. The experimental container is placed into the cavity formed by the heating assembly 2, and the heating assembly 2 is propped open by the experimental container, the heating assembly 2 undergoes elastic deformation, and the cavity becomes larger to clamp the experimental container. The heating assembly 2 returns to its original shape after the experimental container is released, and the cavity becomes smaller. The experimental container may also be of other shapes, as long as the first surface of the heating assembly 2 is matched with the outer surface of the experimental container.

The heating assembly 2 is supported by a housing 1, and the housing 1 provides the necessary rigidity for the heating assembly 2, which is convenient for gripping, and isolates the external air flow to a certain extent, reducing the influence of air flow on the heating temperature. At least one temperature sensor 3 is arranged inside the heating assembly 2 or on a surface of the heating assembly 2, and is configured to monitor the real-time temperature of the heating assembly 2. By controlling the output power of the heating assembly 2, the temperature feedback and regulation function are enabled to maintain the heating assembly 2 at the target temperature.

In the embodiments of the present application, the heating assembly 2 forms a cavity surrounding the experimental container, and the first surface of the heating assembly may match the shape of the outer surface of the experimental container. When the experimental container is similar to a cylindrical test tube, the cross section of the heating assembly 2 is a circular ring, or the cross section of the heating assembly 2 is two semicircular rings. As one embodiment of the present application, when the cross section of the heating assembly 2 is a circular ring, the heating assembly 2 has a gap in the vertical direction, also referred to as an opening. As another embodiment of the present application, when the cross section of the heating assembly 2 is two semicircular rings, the heating assembly 2 has a gap at one of the joints formed by the two semicircular rings, also referred to as an opening. The above opening allows the heating assembly 2 to be elastically deformed, and the size of the cavity formed by the heating assembly 2 is variable through elastic deformation, so that the experimental container can be clamped and released. When the experimental container needs to be heated, the heating assembly 2 is loaded onto the experimental container, the heating assembly 2 is propped open by the experimental container, the heating assembly 2 undergoes elastic deformation, the cavity formed by the heating assembly 2 becomes larger, and then the heating assembly 2 forms a press fit with the experimental container to heat the experimental container. In a condition that the experimental container does not need to be heated, the heating assembly 2 is unplugged to release the experimental container, and the heating assembly 2 returns to its original state. During loading or unloading of the heating device, as there is friction between the heating assembly 2 and the experimental container in the vertical direction, thus the heating assembly 2 is fixed in the vertical direction by means of a pressing plate and screws to prevent the heating assembly 2 from being displaced in the vertical direction. Preferably, the pressing plate and the screws are arranged at the above-mentioned opening, shielding the opening and fixing the heating assembly 2 in the vertical direction without affecting the direction of deformation, this achieves both fixing function and aesthetics.

In the embodiments of the present application, the heating assembly 2 includes at least one heating circuit 21, preferably a resistance heating circuit. The heating circuit 21 is in contact with the outer surface of the experimental container to heat the experimental container when the experimental container is clamped by the heating assembly 2. As an embodiment of the present application, the heating assembly 2 also includes a heating ring 22, and the heating ring 22 has at least one opening in the vertical direction. The heating circuit 21 is attached to the surface of the heating ring 22. The side of the heating ring 22 without the heating circuit 21 is in contact with the outer surface of the experimental container when the experimental container is clamped by the heating assembly 2, thus the contact area between the heating assembly 2 and the experimental container becomes larger. The heating circuit 21 generates heat, and the heat generated by the heating circuit 21 is transferred by the heating ring 22 to the experimental container to heat the experimental container. Preferably, as shown in FIG. 2, the heating circuit 21 has a resistive heating film, which is thin and replaceable. The heating ring 22 is made of a heat-conducting material with good thermal conductivity, such as an aluminum ring, and has a certain thickness. To improve the elastic deformation ability of the aluminum ring, other metals may be added to the aluminum to form an aluminum alloy ring. The heat generated by the heating film is quickly distributed on the entire aluminum ring after being transferred to the aluminum ring, and is also quickly transferred to the experimental container, so that the experimental container is heated more evenly and gently, which avoids local overheating of the heating film to contact the experimental container and affect the biological samples in the experimental container. The resistive heating film and the aluminum ring are both common materials with low production costs. In addition, the aluminum ring has a certain thickness, in which a hole can be dug. The temperature sensor 3 is arranged in the hole of the aluminum ring to monitor the real-time temperature of the aluminum ring, and by controlling the output power of the heating film, the temperature of the aluminum ring at the target temperature is maintained. No additional space is required in the structure, and the temperature monitoring is more accurate. The temperature sensor 3 may also be arranged on the surface of the heating ring 22, which is not limited here.

In the embodiments of the present application, the heating assembly 2 and the temperature sensor 3 are powered by a battery or an external power supply. In case that the heating assembly 2 and the temperature sensor 3 are powered by an external power supply, the positive and negative electrodes required by the heating assembly 2 and the temperature sensor 3 form contacts at the bottom of the heating device to be connected to the external power supply, which are led out by a four-line circuit. To make the structure of the heating device compact, the heating assembly 2 and the temperature sensor 3 are connected to the external power supply through a two-joint pin terminal, and only a two-line circuit is required. In case that the heating assembly 2 is connected to the external power supply through the contacts, to overcome the error caused by the relative position of the experimental container, the external power supply and the heating assembly 2, in the embodiments of the present application, the heating assembly 2 is connected to the housing 1 through a shaft. As shown in FIG. 2, a hole is dug on the heating ring 22 and a shaft is provided. The shaft is fixedly connected to the housing 1, and the heating assembly 2 is rotatable around the shaft to a limited extent with respect to the housing 1.

In the embodiments of the present application, the heating device also includes an insulation cotton 4. The heating assembly 2 has a second surface being opposite to the first surface. The first surface of the heating assembly 2 is in contact with the outer surface of the experimental container and the second surface of the heating assembly 2 is the side away from the experimental container when the experimental container is clamped by the heating assembly. The insulation cotton 4 is attached to the second surface of the heating assembly 2, which can reduce heat loss and enhance the heating effect.

In the embodiments of the present application, the housing 1 includes a window 11 and a magnet 12 arranged at the bottom. In case that the experimental container needs to be heated, the heating assembly 2 is loaded to clamp the experimental container, a processing status of the biological sample in the experimental container can be observed through the window 11, and the window 11 is convenient to grasp for loading or unloading the heating device. The number of windows 11 is not limited here. In case that the experimental container does not need to be heated, the heating device is unloaded and placed on some metal shells, and the metal shells are adsorbed by the magnet 12, which is not easy to lose.

In the embodiments of the present application, the heating assembly forms a cavity surrounding the experimental container, so that the experimental container can be heated when the experimental container is clamped by the heating assembly. The heating assembly is integrated with the temperature sensor(s), such that the heating temperature can be monitored and adjusted in real time. The structure is compact, and the heating assembly clamps or releases the experimental container through its own deformation, which can adapt to repeated loading and disassembly, and will not affect other operations in the experimental container.

### Embodiment 2

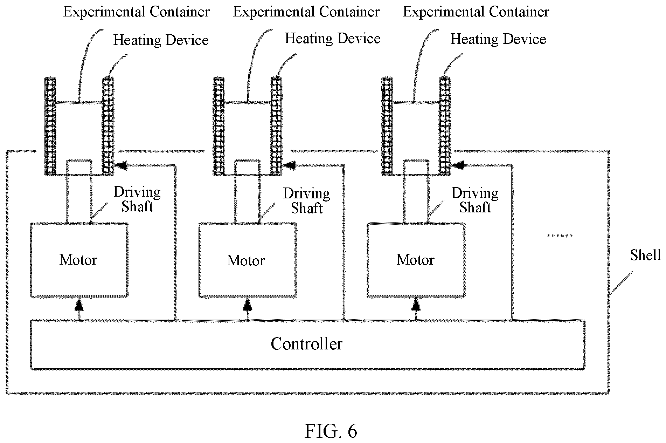

FIG. 6 is a schematic diagram of a biological sample preparation apparatus provided in Embodiment 2 of the present application. As shown in FIG. 6, the biological sample preparation apparatus includes a shell, a plurality of motors, and a plurality of heating devices described in Embodiment 1. In the embodiments of the present application, the structure of the heating device is the same as that of Embodiment 1, including all the features described in Embodiment 1, which will not be repeated here.

In the embodiments of the present application, the plurality of motors are arranged in the shell, and drive shafts of the plurality of motors are respectively connected to a plurality of experimental containers for preparing single cell suspensions, to drive the experimental containers to rotate, meanwhile, the plurality of heating devices respectively clamp the plurality of experimental containers for heating. The biological sample preparation apparatus also includes a controller. The plurality of heating assemblies 2 are controlled by the controller according to the temperatures measured by the plurality of temperature sensors 3, thus, the biological samples in the plurality of experimental containers can be stably maintained at the same or different specific temperatures.

In the embodiments of the present application, the heating assembly forms a cavity surrounding the experimental container, so that the experimental container can be heated when the experimental container is clamped by the heating assembly. The heating assembly is integrated with the temperature sensor(s), such that the heating temperature can be monitored and adjusted in real time. The structure is compact, and the heating assembly clamps or releases the experimental container through its own deformation, which can adapt to repeated loading and disassembly, and will not affect other operations in the experimental container.

Although the foregoing description has illustrated the embodiments of the present application, it should be understood that the above embodiments are exemplary and cannot be understood as limitations on the present application. By persons skilled in the art, changes, modifications, substitutions and variations may be made to the above embodiments within the scope of the present application.

## Claims

1. A heating device for an experimental container, **characterized by** comprising:
a housing (1);
a heating assembly (2), the heating assembly (2) being supported by the housing (1); and
at least one temperature sensor (3), the at least one temperature sensor (3) being arranged with the heating assembly (2);
wherein the heating assembly (2) forms a cavity surrounding the experimental container, a first surface of the heating assembly is matched with an outer surface of the experimental container, and the heating assembly is configured to clamp or release the experimental container by deformation.

2. The heating device according to claim 1, **characterized in that** the heating assembly (2) comprises at least one heating circuit (21).

3. The heating device according to claim 2, **characterized in that** the heating assembly (2) further comprises a heating ring (22), and the at least one heating circuit (21) is attached to a surface of the heating ring (22).

4. The heating device according to claim 3, **characterized in that** the at least one temperature sensor (3) is arranged inside the heating ring (22) or on the surface of the heating ring (22).

5. The heating device according to any one of claims 1 to 4, **characterized in that** the heating assembly (2) is connected to the housing (1) via a shaft.

6. The heating device according to any one of claims 1 to 4, **characterized by** further comprising a heat-insulating cotton (4), wherein the heat-insulating cotton (4) is attached to a second surface of the heating assembly (2).

7. The heating device according to any one of claims 1 to 4, **characterized in that** the heating assembly (2) and the at least one temperature sensor (3) are connected to an external power supply through a two-joint pin terminal.

8. The heating device according to any one of claims 1 to 4, **characterized in that** the housing (1) comprises a window (11).

9. A biological sample preparation apparatus, **characterized by** comprising a shell, a plurality of motors and a plurality of heating devices according to any one of claims 1 to 8;
wherein the plurality of motors are arranged in the shell, and driving shafts of the plurality of motors are respectively connected to a plurality of experimental containers to drive the plurality of experimental containers to rotate, and the plurality of heating devices are configured to clamp respectively the plurality of experimental containers for heating.

10. The biological sample preparation apparatus according to claim 9, **characterized by** further comprising a controller, wherein the controller is configured to control respectively the plurality of heating devices to heat the plurality of experimental containers.
